# EUROPÄISCHE PATENTSCHRIFT

(11) **EP 3 844 398 B1**
(45) Veröffentlichungstag und Bekanntmachung des Hinweises auf die Patenterteilung: **05.07.2023**
(21) Anmeldenummer: 19769996.0
(22) Anmeldetag: 28.08.2019
(51) Int. Cl.: F04D 15/00, F04D 27/00, F04D 29/046, F16C 17/24, F16C 19/52

(54) **VERFAHREN ZUR DETEKTION DES BETRIEBSZUSTANDES EINER ROTIERENDEN MASCHINE**
METHOD FOR DETECTING THE OPERATING STATE OF A ROTATING MACHINE
PROCÉDÉ DE DÉTECTION DE L'ÉTAT DE FONCTIONNEMENT D'UNE MACHINE TOURNANTE

(30) Priorität: 28.08.2018 DE 102018214533; 27.08.2019 DE 102019006038
(43) Veröffentlichungstag der Anmeldung: 07.07.2021
(73) Patentinhaber: KSB SE & Co. KGaA, 67227 Frankenthal (DE)
(72) Erfinder: MADES, Jochen, 67227 Frankenthal (DE); BOSBACH, Franz, 67227 Frankenthal (DE); KLUNKE, Tobias, 67227 Frankenthal (DE)
(86) Internationale Anmeldenummer: PCT/EP2019/072955
(87) Internationale Veröffentlichungsnummer: WO 2020/043772

(56) Entgegenhaltungen:
- EP-A2- 1 703 137
- DE-A1-102004 040 899
- JP-A- S5 743 537
- US-A- 4 460 893
- US-A1- 2007 201 975
- US-B1- 6 435 836

## Beschreibung

Die Erfindung betrifft ein Verfahren zur Detektion des Betriebszustandes einer rotierenden Maschine, insbesondere einer Kreiselpumpe, mit einem ersten Temperatursensor zur Erfassung einer Temperaturänderung in bzw. an wenigstens einem Lagerbereich eines rotierenden Maschinenelementes.

Zur Überwachung und Wartung von Maschinen ist es wünschenswert, Informationen zur Betriebsdauer sowie erfolgte Ein- und Ausschaltzyklen rotierender Elemente bereitstellen zu können. Anhand dieser Informationen lässt sich der aktuelle Verschleiß sowie die verbleibende Lebensdauer der Maschine bzw. von Einzelkomponenten abschätzen. Am einfachsten ist es, wenn die Maschine entsprechende Informationen selbst im Betrieb sammelt und für den externen Abruf bereithält.

In der Praxis wird jedoch die notwendige Sensorik zur unmittelbaren Erfassung der Betriebsdauer bzw. der Ein- und Ausschaltvorgänge nicht immer bereitgehalten, sei es aus Kostengründen oder auch, weil eine invasive Einbringung der Sensoren an entsprechenden Messstellen nicht immer trivial ist. Ein Beispiel sind hier abgedichtete Pumpen bzw. Nassläufer. Für solche Spezialfälle ist es bereits bekannt, Betriebs- und Stillstandzeiten anhand gemessener Maschinenvibrationen zu erfassen. Hierbei werden Schwingungssignale im Bereich der Maschine ausgewertet. Eine solche Auswertung eignet sich jedoch nicht für jede Maschine, denn je nach Einsatzbereich und Maschinentyp kommt es zu starker Beeinflussung der messbaren Schwingungen durch die Umgebung oder aber die messbaren Schwingungen sind so klein, so dass nur vage Schätzungen möglich sind.

Als Alternative zur Schwingungsmessung wird im Stand der Technik bereits vorgeschlagen, die gemessene Maschinentemperatur als Indikator für den aktuellen Betriebszustand heranzuziehen. Bisherige Implementierungen genügen allerdings noch nicht den qualitativen Anforderungen und sind daher verbesserungswürdig.

Die JP S57 43537 A beschreibt ein Verfahren, um Anomalien in einem Lager einer elektrischen Rotationsmaschine zu erkennen, wobei das Temperaturänderungsverhältnis des Lagers erfasst und mit einem eingestellten Wert verglichen wird.

Die EP 1 703 137 A2 offenbart ein Diagnoseverfahren zur Überprüfung des Gerätezustandes eines Ventilators innerhalb eines zeitlich begrenzten Funktionslaufs.

Die US 6 435 836 B1 zeigt ein Verfahren, bei dem, wenn ein Anstieg der Temperatur des Fördermediums pro Zeit einen vorgegebenen Wert überschreitet, die Pumpe abgeschaltet oder die Durchflussmenge oder der Druck des Fördermediums abhängig von der vom Thermistor erfassten Temperatur des Fördermediums geändert wird.

Die vorliegende Anmeldung setzt sich daher zum Ziel, die zuletzt genannte Lösung zu optimieren, um eine verbesserte Auswertung des Betriebszustands zu ermöglichen und um gegebenenfalls weitere Erkenntnisse aus der Auswertung ableiten zu können.

Gelöst wird diese Aufgabe durch ein Verfahren gemäß den Merkmalen des Anspruchs 1. Vorteilhafte Ausgestaltungen sind Gegenstand der abhängigen Ansprüche.

Erfindungsgemäß wird ein Verfahren zur Detektion des Betriebszustandes einer rotierenden Maschine vorgeschlagen. Als rotierende Maschine wird jede Maschine verstanden, bei der mindestens ein Maschinenelement um eine Rotationsachse relativ zu übrigen Maschinenkomponenten rotiert, wie dies beispielsweise bei jedem Rotationsantrieb der Fall ist. Das rotierende Bauteil ist hier über wenigstens ein Lager drehbar an den übrigen Maschinenkomponenten gelagert. Besonders bevorzugt ist der Einsatz des Verfahrens bei einer Pumpe, insbesondere einer Kreiselpumpe, die eine rotierende Pumpenwelle umfasst, die über ein oder mehrere Lager im oder am Pumpengehäuse drehbar gelagert ist. Die Erfindung soll jedoch keinesfalls auf einen konkreten Maschinentyp beschränkt sein, sondern der erfindungsgemäße Grundgedanke ist unabhängig vom Maschinentyp anwendbar.

Ein wesentlicher Aspekt der Erfindung besteht darin, dass ein erster Temperatursensor eingesetzt wird, der durch die Rotation des rotierenden Elementes hervorgerufene Temperaturänderungen während des Betriebs der Maschine erfassen kann, und zwar solche, die durch die Lagerreibung, die Reibung an Dichtungen sowie durch Einflüsse des geförderten Mediums und/oder der Umgebung bedingt sind. Erfindungsgemäß ist vorgesehen, eine Temperaturänderung im Bereich des Lagers, also in räumlicher Nähe der Lagerung, insbesondere an einer lagernahen Oberfläche, zu erfassen. Es lassen sich also anhand der aufgezeichneten Temperatursignale, d.h. der sensorisch gemessenen Temperatur, Temperaturänderungen erfassen, die durch den Betrieb der Maschine unter Berücksichtigung der Umgebungsbedingungen verursacht werden. Der Temperatursensor misst üblicherweise wiederholend die aktuelle Temperatur und stellt diese der Auswerteeinheit zur Verfügung. Aus den Einzelmessungen ergibt sich ein Temperaturverlauf. Erfindungsgemäß werden durch die Auswerteeinheit nun nicht mehr nur einfache Temperaturwerte betrachtet, sondern stattdessen erfolgt eine Gradientenauswertung des aufgezeichneten Temperaturverlaufs. Konkret wird also die Charakteristik eines etwaigen Temperaturanstiegs oder Temperaturabfalls betrachtet. Anhand der spezifischen Charakteristik lässt sich dann ein Ein- oder Ausschaltvorgang der Maschine erkennen. Denkbar ist es natürlich, dass Teile der Logik der Auswerteeinheit auch direkt durch den Temperatursensor ausgeführt werden, so dass dieser beispielsweise direkt etwaige Temperaturänderungen erfasst und an die Auswerteeinheit ausgibt. Möglich ist natürlich auch die vollständige Integration der Auswerteeinheit in den Temperatursensor.

Der erfindungsgemäßen Idee liegt die Überlegung der Erfinder zugrunde, dass sich die Temperatur im Bereich wenigstens eines Lagers in Abhängigkeit des Maschinenzustandes ändert. Die mögliche Temperatur im bzw. am Lagerbereich hängt natürlich von der Betriebsdauer als auch der Maschinenlast ab. Allerdings wurde bei ausführlichen Untersuchungen durch die Erfinder festgestellt, dass es zu einer kurzzeitigen vergleichsweise raschen Temperaturänderung im Moment des Ein- bzw. Ausschaltvorganges kommen kann. Durch eine Gradientenbetrachtung des Messverlaufs kann ein solches Phänomen erkannt und ein entsprechender Ein- oder Ausschaltvorgang erfasst werden.

Eine solche Temperaturänderung mit vergleichsweise großem Gradienten tritt im regulären durchgehenden Betrieb im Regelfall nicht auf, d.h. auch praxisübliche Temperaturschwankungen während des Dauerbetriebs als auch während Laständerungen führen nicht zu einem vergleichbaren Gradienten. Vor diesem Hintergrund ist es möglich, anhand der Gradientenbetrachtung eine zuverlässige Detektion des aktuellen Betriebszustandes der Maschine zu erreichen.

Gemäß dem Verfahren wird die Temperatur kontinuierlich oder diskret mit definierter Messfrequenz oder in spezifischen Messintervallen erfasst. Der daraus abgeleitete Temperaturverlauf wird einer Gradientenbetrachtung unterzogen, wobei insbesondere solche Gradienten in den Fokus rücken, die innerhalb kürzester Zeit eine herausstechende Temperaturänderung zeigen, d.h. der Gradient überschreitet eine definierte Minimalsteigung, d.h. eine minimale Temperaturänderung pro Zeiteinheit.

Vorzugsweise schließt die Auswerteeinheit auf einen erfolgten Ein- und/oder Ausschaltvorgang der Rotationsbewegung der Maschine, wenn der betrachtete Gradient einen Mindestwert überschreitet bzw. innerhalb eines definierten Wertebereichs liegt. Dies entspricht der vorangehenden Erkenntnis, wonach eine durch einen Ein- bzw. Ausschaltvorgang verursachte Temperaturänderung einen höheren Gradienten als lastbedingte bzw. betriebsbedingte Temperaturänderungen aufzeigt. Denkbar ist hier auch eine Definition mehrerer Mindestwerte (Schwellwerte) oder Wertebereiche. Beispielsweise wird bei Überschreiten eines unteren Mindestwertes ein Schaltvorgang erkannt, während ein höherer Schwellwert dann eine Differenzierung zwischen Ein- und Ausschaltvorgang ermöglicht, d.h. überschreitet der betrachtete Gradient auch den oberen Schwellwert wird bspw. auf einen ausgeführten Ausschaltvorgang geschlossen.

Technisch kann dieses Phänomen dadurch erklärt werden, dass nach dem Ausschalten der Rotationsbewegung die betriebsbedingte Maschinenerwärmung nicht durch den während der Rotationsbewegung verursachten Luftmassestrom gekühlt wird, sodass die Temperatur zunächst zunimmt und erst mit gewisser Verzögerung wegen des Maschinenstopps auf eine niedrigere Temperatur, bspw. die Umgebungstemperatur abfällt. Ein ähnliches Verhalten kann bei einem Anschaltvorgang beobachtet werden. Hier befindet sich die Maschine zunächst üblicherweise auf dem Temperaturniveau der Umgebung. Wird die Rotation der Maschine aktiviert, so kommt es aufgrund der entstehenden Luftmassebewegung zu einem Kühleffekt, der einen kurzzeitigen Abfall der Temperatur im Lagerbereich bewirkt, die besonders deutlich an der Oberfläche des Lagerträgers zu Tage tritt. Das Temperaturniveau steigt erst wieder mit zunehmender Betriebsdauer aufgrund der regulären Lagerreibung an. Die zuvor genannten Phänomene während des Schaltvorgangs können in ihrer Ausprägung noch dadurch bestärkt werden, wenn ein zusätzlicher Lüfter innerhalb der rotierenden Maschine installiert ist, der während der Rotationsbewegung einen höheren Luftmassestrom zur Kühlung etwaiger Maschinenkomponenten bereitstellt, während Stillstandzeiten jedoch ausgeschaltet ist.

Gemäß bevorzugter Ausführung wird durch den ersten Temperatursensor die Temperatur am Lagerträger, insbesondere an der Oberfläche des Lagerträgers, erfasst. Der Sensor kann hierzu unmittelbar im Bereich des Lagers bzw. am Lagerträger montiert sein. Eine Montage außen am Lagerträger hat den Vorteil, dass kein invasiver Eingriff in die Maschinenstruktur notwendig ist, was insbesondere bei abgedichteten Kreiselpumpen von besonderer Bedeutung ist. Entscheidend für die Positionierung des Temperatursensors ist jedoch, dass sich hierdurch betriebsbedingte Temperaturänderungen, d.h. Temperaturänderungen, die durch Lagerreibung, Reibung an Dichtungen oder durch das geförderte Medium verursacht werden, zuverlässig erfassen lassen. Als nachteilig hat sich dagegen herausgestellt, die Temperatur unmittelbar im Lager zu erfassen, indem der Sensor direkt in das Lager integriert wird. Neben einer damit einhergehenden aufwändigen Integration eines kleinen und dadurch kostenintensiven Sensors, lassen sich im Lager die Temperaturänderungen, die auf die Änderungen der Betriebs- und/oder Umgebungsbedingungen zurückzuführen sind, nicht mit ausreichender Genauigkeit detektieren. Der Vorteil der erfindungsgemäßen nicht invasiven, lagernahen Messstelle liegt in deren einfacher und kostengünstiger Implementierungsmöglichkeit. Ein weiterer Vorteil ergibt sich aus der Erkenntnis, dass die Temperaturänderungseffekte bei Veränderung der Betriebsbedingungen wie Zu- und Abschaltung außerhalb, insbesondere an der Lagerträgeroberfläche, deutlicher auftreten als im Lager selbst. Idealerweise wird die Temperatur an einer von außen zugänglichen Stelle des Lagerträgers, insbesondere an einer Oberfläche des Lagerträgers, erfasst.

Der wenigstens eine Mindestwert bzw. der wenigstens eine definierte Bereich für die Beurteilung des Gradienten, insbesondere ob dieser einen Ein- bzw. Ausschaltvorgang charakterisiert, muss selbstverständlich maschinenabhängig definiert werden. Ein entscheidender Einflussfaktor ergibt sich durch die Maschinengröße bzw. den Anteil des temperaturleitfähigen Materials des Maschinenvolumens, denn je größer die Temperaturleitfähigkeit ist, desto besser können die Wärme abgeführt und Temperaturänderungen kompensiert werden. Auch sind gegebenenfalls Umwelteinflüsse zu berücksichtigen. Damit wird ein entsprechender Mindestwert bzw. Mindestbereich in Abhängigkeit von dem temperaturleitenden Maschinenvolumen als auch der konkreten Geometrie der Maschine und/oder der Umgebungsbedingungen der Maschine definiert, wobei der Grenzwert mit zunehmender Größe/Leitfähigkeit reduziert wird. Denkbar ist hier ein durch die Auswerteeinheit ausgeführter adaptiver Lernprozess zur Optimierung der ein oder mehreren Mindestwerte bzw. Bereiche.

Bei der Betrachtung des Temperaturverlaufs kann jedoch nicht nur der Gradient Erkenntnisse über den Maschinenzustand liefern, sondern die Auswerteeinheit kann ebenfalls das Vorzeichen des Gradienten als auch den Betrag der maximalen Temperaturänderung des betrachteten Gradienten berücksichtigen, d.h. die durch den Gradienten bedingte Temperaturdifferenz. Der Betrag der maximalen Temperaturänderung als auch das Vorzeichen des Gradienten können als Indikator dienen, um zwischen unterschiedlichen Schaltvorgängen differenzieren zu können, d.h. um unmittelbar anhand des Gradienten und unabhängig von der Kenntnis des vorhergehenden Maschinenzustandes feststellen zu können, ob die Maschine ein- oder ausgeschaltet wurde. Wie vorstehend erläutert, kann der Gradient für einen Einschaltvorgang aufgrund des kurzfristigen Temperaturabfalls zunächst ein negatives Vorzeichen aufweisen, während der Gradient eines Abschaltvorgangs zunächst ein positives Vorzeichen aufweist. Auch der Gradientenwert selbst, d.h. die Höhe des detektierten Gradientenwertes, kann zur Differenzierung zwischen Ein- und Ausschaltvorgang betrachtet werden, denn ein Ausschaltvorgang zeigt, wie durch die Erfinder experimentell ermittelt wurde, einen höheren Gradientenwert als ein Einschaltvorgang.

Ebenso kann die Dauer der anhaltenden maximalen Temperaturänderung eine Rolle spielen, denn wie bereits vorstehend beschrieben folgt auf eine rapide Temperaturänderung, hervorgerufen durch einen Schaltzyklus, innerhalb kürzester Zeit eine erneute Temperaturänderung in entgegengesetzter Richtung. Die Berücksichtigung dieses Verhaltens, d.h. die Peakdauer der maximalen Temperaturänderung fördert die zuverlässige Erkennung des Schaltzyklus.

Ferner besteht die Möglichkeit, dass die Auswerteeinheit anhand des Betrages der maximalen Temperaturänderungen und/oder Gradientenhöhe nicht nur Schaltzustände erkennt, sondern ebenfalls Aussagen über aktuelle Maschinenlast und/oder etwaige Verschleißerscheinungen an der Maschine treffen kann. Insbesondere kann davon ausgegangen werden, dass eine Änderung des Maximalbetrags der Temperaturänderung und/oder des beobachteten Gradientenbetrages gegenüber vorangehenden Schaltzyklen einen Hinweis auf eine Laständerung bzw. zunehmenden Verschleiß an der Maschine, insbesondere im Bereich des erfassten Lagers darstellen kann. Beispielsweise kommt es bei einer Zunahme der Last bzw. bei zunehmenden Verschleiß an der Maschine, insbesondere im Bereich des erfassten Lagers, zu einer Zunahme des Maximalbetrags der Temperaturänderung und/oder des beobachteten Gradientenbetrages gegenüber vorangehenden Schaltzyklen, denn Lagerverschleiß führt zu einer erhöhten Lagerreibung, was sich gleichermaßen im Gradienten als auch der maximalen Lagertemperatur wiederfindet. Demgegenüber kann es bei einer Verringerung der Maschinenlast auch zu einer Abnahme des Maximalbetrags der Temperaturänderung und/oder des beobachteten Gradientenbetrages gegenüber vorangehenden Schaltzyklen kommen.

Grundsätzlich können mehrere Temperatursensoren zur Erfassung einer von wenigstens einem Lager eines rotierenden Maschinenelementes ausgehenden Temperaturänderung eingesetzt werden. Dabei können natürlich pro lagernaher Messstelle, also einer Messstelle im bzw. am Lagerbereich, mehrere Sensoren verwendet werden, idealerweise wird jedoch pro lagernaher Messstelle ein Temperatursensor verwendet. Die Verwendung mehrerer Temperatursensoren kann auch aus Redundanzgründen sinnvoll sein, denn der von den Erfindern entdeckte Effekt tritt natürlich an jeder lagernahen Messstelle für das rotierende Maschinenelement auf. Ein weiterer Vorteil bei der Verwendung eines Sensors pro verbautem Lager besteht darin, dass hierdurch natürlich auch eine Verschleißüberwachung für jedes einzelne Lager möglich wird. Es lässt sich also der Zustand und die aktuelle Belastung jedes Lagers überwachen.

Gemäß einer vorteilhaften Weiterbildung der Erfindung besteht die Möglichkeit, den Temperaturverlauf im Lagerbereich mit Bezug zu einer weiteren Temperaturgröße zu untersuchen, insbesondere mit Bezug zur aktuellen Umgebungstemperatur der Maschine. Dadurch lassen sich Einflüsse der Umgebungstemperatur auf Temperaturänderungen im Lagerbereich herausfiltern. Sinnvoll ist bspw. der Einsatz wenigstens eines weiteren Temperatursensors, der an der Maschine bzw. unmittelbarer Nähe zur Maschine positioniert ist und die Umgebungstemperatur laufend erfasst. Der der Gradientenauswertung zugrunde liegende Temperaturverlauf entspricht dann bevorzugt dem Verlauf der Differenztemperatur zwischen den gemessenen Temperaturwerten, d.h. der Differenz zwischen Temperatur im Lagerbereich und der Umgebungstemperatur. Dadurch können durch veränderte Umgebungsbedingungen hervorgerufene Temperaturänderungen im Temperaturverlauf unterdrückt werden und die Auswertung kann allein auf maschinenbedingte Temperaturänderungen konzentriert werden. Denkbar ist es ebenso, durch ein oder mehrere weitere Sensoren weitere störende Einflüsse zu berücksichtigen und auszufiltern. Hierzu zählt bspw. auch die Temperatur eines durch die Maschine strömenden Mediums, insbesondere des Fördermediums bei Pumpen. Wie bei der Umgebungstemperatur könnte in diesem Fall auch die Mediumtemperatur erfasst werden und als Temperaturverlauf die Differenztemperatur zwischen Lagertemperatur und Mediumtemperatur betrachtet werden. Entscheidend beim Einsatz eines weiteren Temperatursensors ist, dass dieser mit ausreichendem Abstand zum Lager/Lagerträger an oder außerhalb der Maschine positioniert ist. Ab- und Aufheizbedingungen der Umgebung sind somit gut feststellbar.

Bezüglich dieser vorteilhaften Ausführung ist zu erwähnen, dass die bereitgestellten Daten zur Umgebungstemperatur bzw. Mediumtemperatur oder sonstiger störender Einflüsse nicht zwingend von einem dafür vorgesehenen Sensor stammen müssen sondern grundsätzlich auch von einer beliebigen Informationsquelle, bspw. einem Informationsserver abgerufen werden können.

Gemäß bevorzugter Ausgestaltung des Verfahrens wird eine weitergehende Auswertung der detektierten Ein- und Ausschaltvorgänge betrieben. Insbesondere sollen alle detektierten Ein- und Ausschaltzyklen während einer definierten Zeitspanne und/oder der Gesamtlebensdauer der Maschine gezählt werden. Weiterhin bevorzugt kann auch die tatsächliche Betriebsphase zwischen einem Einschaltvorgang und dem nachfolgenden Ausschaltvorgang erfasst werden. Durch Addition der einzelnen Betriebsdauern zwischen zwei Schaltvorgängen kann zudem die Gesamtbetriebsdauer erfasst werden. Gleiches Vorgehen kann auch für die Erfassung von Stillstandzeiten angewendet werden, indem eine einzelne Stillstandzeit zwischen einem Ausschaltvorgang und einem nachfolgenden Einschaltvorgang erfasst wird. Durch Addition kann ebenfalls die Gesamtstillstandzeit der Maschine ermittelt werden. Die vorgenannten Informationen können erfasst und für einen späteren Abruf innerhalb eines Speichers der Auswerteeinheit bereitgehalten werden. Vorstellbar ist auch die einmalige, periodische oder zufällige Übermittlung dieser Informationen an wenigstens einen externen Empfänger. Kenntnis über die Frequenz und Dauer von Stillstandzeiten ist gerade bei Trinkwasserpumpen von Bedeutung, da diese während Stillstandzeiten zum Festbacken neigen.

Die aktuelle Temperatur wird durch den ersten und gegebenenfalls die weiteren Temperatursensoren mit einer bestimmten Messfrequenz wiederkehrend erfasst. Die Messfrequenz kann statisch als auch frei definierbar sein. Denkbar ist eine Definition der Messfrequenz in Abhängigkeit der konkreten Einsatzbedingungen der Maschine als auch in Abhängigkeit des Maschinentyps, wobei auch hier das Volumen der Maschine bzw. das Volumen der temperaturleitfähigen Bestandteile Einfluss auf die benötigte Messfrequenz haben. Allgemein gilt, dass eine zu geringe Messfrequenz die Gefahr birgt, dass relevante Gradienten möglicherweise nicht zuverlässig erfasst werden. Demgegenüber verlangt eine unnötig hohe Messfrequenz die Bereithaltung großer Leistungs- und Speicherressourcen innerhalb der Auswertereinheit, so dass idealerweise ein Kompromiss hinsichtlich der gestellten Bedingungen bei der Wahl der Messfrequenz getroffen werden muss.

Bevorzugt könnte auch eine dynamische Einstellung der Messfrequenz erfolgen, die idealerweise von der Auswerteeinheit während des laufenden Maschinenbetriebs und der Temperaturerfassung selbsttätig in Abhängigkeit etwaiger Parameter und/oder Messwerte eingestellt wird. Bspw. verwendet die Auswerteeinheit standardmäßig eine vordefinierte Messfrequenz. Wird jedoch zu einem Zeitpunkt im Ansatz ein vergleichsweise hoher Gradient bzw. ein starker Temperaturanstieg festgestellt, wird unverzüglich und temporär die angewendete Messfrequenz für wenigstens einen der Sensoren, vorzugsweise zumindest den ersten Temperatursensor, dynamisch erhöht, um die Messgenauigkeit zu diesem Zeitpunkt temporär zu erhöhen, was letztendlich die verlässliche Detektion des Ein- und Ausschaltvorgangs verbessert. Vorstellbar ist es ebenso, dass die Auswerteeinheit das Messintervall aus Gründen der Energieeinsparung im laufenden Betrieb vergrößert, d.h. die Messfrequenz reduziert. Denkbar ist es, dass die Auswerteeinheit auf ein initiales kurzes Messintervall konfiguriert ist. Ein solches initiales Messintervall ist insbesondere so gewählt, dass möglichst alle schnellen Temperaturgradienten zuverlässig erkannt werden, möglichst auch maschinenunabhängig. Erkennt die Auswerteeinheit im laufenden Betrieb dann, dass eine zuverlässige Gradientenerkennung und damit zuverlässige Detektion von Schaltvorgängen auch bei einem größeren Messintervall gesichert ist, dann passt die Auswerteeinheit dies einmalig, schrittweise oder kontinuierlich auf einen möglichst optimalen Wert an, der einerseits eine sichere Detektion gewährleistet, andererseits aber aufgrund der reduzierten Messvorgänge die gewünschte Energieeinsparung mit sich bringt.

Neben dem erfindungsgemäßen Verfahren betrifft die vorliegende Erfindung auch eine rotierende Maschine, insbesondere eine Pumpe bzw. ein Pumpenaggregat, vorzugsweise Kreiselpumpe bzw. Kreiselpumpenaggregat, mit wenigstens einer Auswerteeinheit zur Ausführung des Verfahrens gemäß einem der vorhergehenden Ansprüche. Die entsprechende Auswerteeinheit kann als externe Einheit vorgesehen sein, alternativ jedoch auch innerhalb einer regulären Pumpensteuerung integriert sein. Mittels wenigstens eines Temperaturfühlers der rotierenden Maschine wird eine entsprechende lagernahe Messstelle an der rotierenden Welle des Pumpenlaufrades, insbesondere eine Messstelle an der Lagerträgeroberfläche, auf etwaige Temperaturänderungen überwacht und entsprechend ausgewertet.

Neben der rotierenden Maschine wird ebenso ein System unter Schutz gestellt, das aus einer rotierenden Maschine mit wenigstens einem Temperatursensor und einer externen Auswerteeinheit besteht, die mit dem wenigstens einen Temperatursensor kommunikativ in Verbindung steht und zur Durchführung des Verfahrens gemäß der vorliegenden Erfindung ausgestaltet ist.

Zuletzt lässt sich das Verfahren auch durch einen intelligenten Temperatursensor ausführen, der zur Anbringung an wenigstens einer rotierenden Maschine, insbesondere dort im bzw. am Lagerbereich geeignet ist. Ein solcher Temperatursensor weist eine integrale Auswerteeinheit auf, die konfiguriert ist das erfindungsgemäße Verfahren auszuführen. Sowohl für die rotierende Maschine als auch das System und den Temperatursensor gelten dementsprechend dieselben Vorteile und Eigenschaften, wie sie bereits vorstehend anhand des erfindungsgemäßen Verfahrens aufgezeigt wurden. Auf eine wiederholende Beschreibung wird daher an dieser Stelle verzichtet.

Weitere Vorteile und Eigenschaften der Erfindung sollen nachfolgend anhand eines in den Figuren dargestellten Ausführungsbeispiels näher erläutert werden. Es zeigen:
- Figur 1:: ein Diagramm, das den sensorisch erfassten Temperaturverlauf über die Zeit im Bereich des Lagerträgers einer rotierenden Maschine (hier Kreiselpumpe) darstellt,
- Figur 2:: zwei weitere Diagrammdarstellungen, die den Gradientenverlauf einer Temperaturdifferenz über die Zeit darstellen und
- Figur 3:: eine schematische Darstellung einer erfindungsgemäßen Kreiselpumpe mit markierten möglichen Montagepunkten für die Anbringung eines Temperatursensors zur Erfassung der Lagertemperatur und der Umgebungstem peratur.

Zur Detektion der Schaltzeiten einer rotierenden Maschine, insbesondere eines Pumpenaggregates, wurden von den Erfindern drei wesentliche charakteristische Merkmale identifiziert, auf die sich aufgezeichnete Messdaten ein oder mehrerer Temperatursensoren untersuchen lassen.
1. Ein kurzfristiger Abfall/Gradient der im Lagerbereich bzw. am Lagerträger gemessenen Temperatur, der auf ein Einschalten des Aggregats hinweist.
2. Ein kurzfristiger Anstieg/Gradient der im Lagerbereich bzw. am Lagerträger gemessenen Temperatur, der auf das Ausschalten des Aggregats hinweist.
3. Anzahl und Größe der Gradienten der im Lagerbereich bzw. am Lagerträger gemessenen Temperatur mit Bezug auf die Umgebungstemperatur der Maschine.

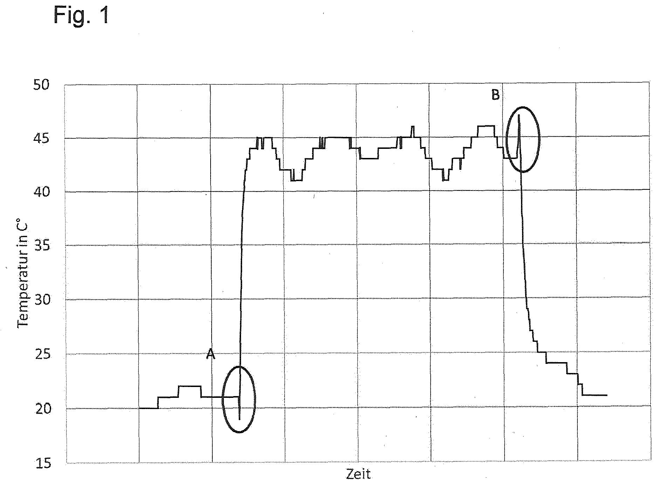

Zur Erläuterung der Merkmale 1 und 2 wird auf die Diagrammdarstellung der Figur 1 verwiesen. Das Diagramm zeigt die am Lagerträger, genauer an dessen Oberfläche, einer Kreiselpumpe gemessene Temperatur über die Zeit. Mit Position A ist ein kurzzeitiger negativer Temperaturpeak markiert, der ein kurzzeitiges Abfallen der Temperatur im Bereich des Lagers der Maschine zeigt. Dieses Phänomen tritt dadurch auf, dass beim Anlaufen des Pumpenantriebs ein Luftmassestrom erzeugt wird, der eine Kühlwirkung auf das Lager bzw. den Lagerträger mit sich bringt. Bestärkt wird diese Kühlwirkung zusätzlich durch einen Lüfter des Elektromotors des Pumpenantriebs. Dies führt letztendlich zu einer verzögerten, reibungsbedingten Erwärmung des Lagerträgers.

Ersichtlich ist in der Diagrammdarstellung, dass die Charakteristik dieses Ausschlages in Position A deutlich von dem übrigen Temperaturverlauf abweicht, insbesondere ist der Gradient des Temperaturverlaufs deutlich größer als bei den vorausgehenden Temperaturschwankungen und den nachfolgenden Temperaturschwankungen zwischen der Position A und Position B. Diese Temperaturschwankungen sind durch äußere Einflüsse (bspw. Umgebungstemperatur) als auch betriebsbedingte Einflüsse wie Laständerungen bedingt.

Der Gradient bei Position A wird von der Auswerteeinheit der Pumpe damit als eindeutiges Indiz für einen Einschaltvorgang des Pumpenantriebs gewertet.

An der gekennzeichneten Position B ist dem gegenüber ein kurzzeitiger rapider Anstieg der gemessenen Temperatur am Lagerträger zu erkennen. Ein solches Verhalten stellt sich unmittelbar nach dem Abschalten des Pumpenantriebs ein, denn durch die fehlende Rotationsbewegung nimmt der kühlende Luftmassestrom ab bzw. unterbleibt vollständig, so dass die Betriebstemperatur des Lagers/ der Pumpe zunächst zu einer kurzzeitigen schnellen Temperaturerhöhung des Lagerträgers führt und eine Abkühlung des Lagerträgers bzw. der Maschine auf die Umgebungstemperatur erst mit gewisser Verzögerung eintritt. Auch der in Position B markierte Gradient unterscheidet sich deutlich von den sonstigen Steigungen der üblichen Temperaturschwankungen, so dass auch hier von der Auswerteeinheit eindeutig auf einen Ausschaltvorgang geschlossen werden kann.

Vorliegend kann die Auswerteeinheit die detektierten Gradienten in den Positionen A, B anhand des Gradientenvorzeichens als auch anhand des Maximalbetrages der Temperaturänderung, d.h. der Peakhöhe voneinander unterscheiden, um diese somit eindeutig einem Ein- bzw. Ausschaltvorgang der Maschine zuordnen zu können. Konkret ist der Gradient für einen Einschaltvorgang in Position A zunächst negativ bis es aufgrund der verzögerten Temperaturerhöhung bedingt durch die Lagerreibung zum Vorzeichenwechsel kommt. Im Gegensatz dazu ist der Gradient beim Ausschaltvorgang zunächst positiv und der Vorzeichenwechsel tritt dann mit der verzögerten Abkühlung der Maschine aufgrund des Maschinenstillstandes ein.

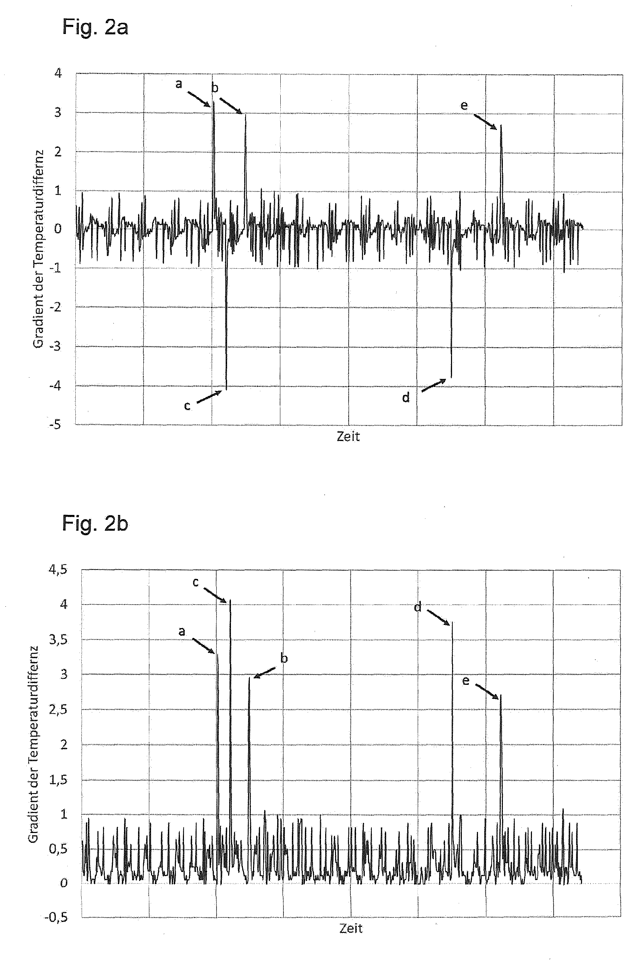

Eine erweiterte Lösung der Erfindung soll anhand der Diagrammdarstellung der Figuren 2a, 2b erläutert werden. In Figur 2a sind nun die Gradienten über die Zeit eines Temperaturdifferenzverlaufs aufgetragen. Konkret wird in diesem Beispiel neben der Lagertemperatur synchron die Umgebungstemperatur der Maschine erfasst und aus den beiden Temperaturwerten ein Differenzbetrag gebildet. Aus diesem zeitlichen Verlauf der Temperaturdifferenz wird dann der gezeigte Gradientenverlauf gemäß Figur 2a ermittelt. Durch diese Vorkehrung kann die Erwärmung am Lagerträger weitgehend frei von Umwelteinflüssen festgestellt und bewertet werden.

Auch hier macht man sich bei der Auswertung die oben beschriebenen Phänomene zu Nutze, dass während eines Ein- und Ausschaltvorgangs charakteristische Temperaturgradienten vorliegen, die von der Auswerteeinheit erfasst und als Indikator zur Detektion eines Ein- bzw. Ausschaltvorgangs verwendet werden. In Figur 2a sind insgesamt fünf dieser charakteristischen Gradienten erkennbar, die sich durch einen deutlich höheren Wert des Gradienten gegenüber Gradienten bei last- bzw. zeitbedingten Temperaturschwankungen auszeichnen. Diese Gradienten sind durch die Punkte a-e gekennzeichnet, wobei die Positionen a, b, e ein positives Vorzeichen tragen während die Gradienten c, d negativ sind. In Verbindung mit den oben beschriebenen Merkmalen 1, 2 sowie die Betrachtung der Größe der Gradienten a-e lässt sich erkennen, ob die Maschine an- oder ausgeschaltet wurde.

Zur besseren Vergleichbarkeit wird nur der Gradientenbetrag betrachtet, d.h. es erfolgt eine Vorzeichenumkehrung für die negativen Gradienten, was in Figur 2b gezeigt ist. Figur 2b veranschaulicht nun deutlich, dass die Gradienten c, d höher sind als die Gradienten a, b und e. Unter Berücksichtigung der vorgehenden Erläuterungen, wonach bei einem Ausschaltvorgang höhere Gradienten vorliegen, kann die Auswerteeinheit nun feststellen, dass die Gradienten c, d Ausschaltvorgänge anzeigen, während die Gradienten a, b, e für Einschaltvorgänge stehen.

Zur weiteren Auswertung der Betriebszeiten der Kreiselpumpe werden nun die detektierten Gradienten a-e gezählt, um dadurch die Anzahl erfolgter Schaltvorgänge ermitteln zu können. In Kenntnis der Schaltzahlen einer Maschine lassen sich dann weiter die Betriebs- und Stillstandzeiten der Maschine bestimmen.

Die anhand der Figur 1 und der Figuren 2a, 2b unterschiedlichen Vorgehensweisen zur Schaltvorgangserkennung lassen sich natürlich auch miteinander kombinieren, um die Qualität der Erkennung weiter zu optimieren.

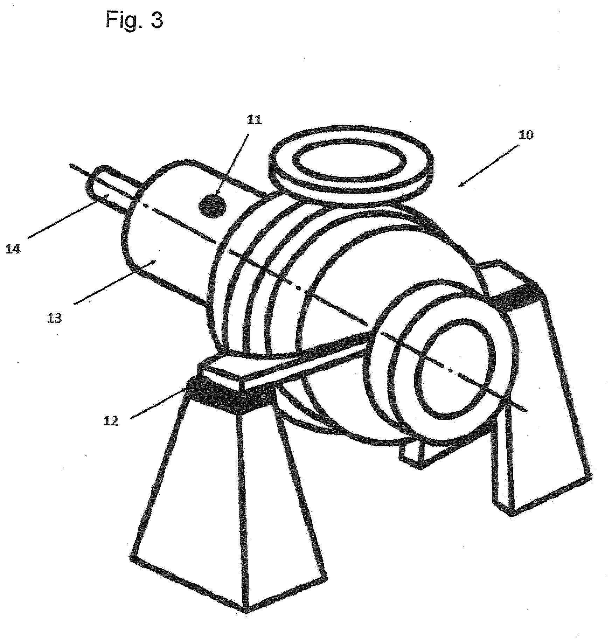

In Figur 3 ist schematisch eine rotierende Maschine in Form einer Kreiselpumpe 10 dargestellt. Die Kreiselpumpe 10 umfasst eine rotierende Welle 14, die einerseits das Pumpenlaufrad aufnimmt und andererseits durch den Pumpenantrieb angetrieben wird. Die Welle wird durch wenigstens ein Lager drehbar gelagert, wobei das Lager innerhalb des gezeigten Lagerträgers 13 sitzt. Die Rotation der Welle verursacht eine Lagerreibung, die zu einer Erwärmung der Maschine 10 und insbesondere des Lagerträgers 13 führt. Für das erfindungsgemäße Verfahren wird nun die Temperatur im Bereich des Lagers, insbesondere an der Oberfläche des Lagerträgers, erfasst.

Grundsätzlich kann die Messung der Temperatur des Lagerträgers 13 an beliebigen Stellen erfolgen. Bevorzugt wird jedoch eine Messung möglichst dicht an der Lagerstelle, das heißt an einer lagernahen Oberfläche des Lagerträgers, um eine exakte Aussage über die Temperaturentwicklung, hervorgerufen durch Lagerreibung treffen zu können. Eine potentielle Messstelle für die Temperatur des Lagerträgers ist mit dem Bezugszeichen 11 gekennzeichnet.

Die Messung der Umgebungstemperatur sollte bevorzugt in ausreichendem Abstand zu vergleichsweise heißen oder kalten Komponenten der Maschine, aber dennoch in unmittelbarer Umgebung der Maschine durchgeführt werden. Figur 3 zeigt auch hier eine potentielle Messstelle für die Umgebungstemperatur mit dem Bezugszeichen 12.

## Patentansprüche

1. Verfahren zur Detektion des Betriebszustandes einer rotierenden Maschine, insbesondere einer Kreiselpumpe, mit wenigstens einem ersten Temperatursensor zur Erfassung einer Temperaturänderung an wenigstens einem Lagerbereich eines rotierenden Maschinenelementes,
wobei eine Auswerteeinheit den sensorisch ermittelten Temperaturverlauf auf Temperaturgradienten untersucht,
**dadurch gekennzeichnet, dass**
die Auswerteeinheit einen Ein- und/oder Ausschaltvorgang der Rotationsbewegung der Maschine anhand der Charakteristik der ermittelten Temperaturgradienten erkennt.

2. Verfahren nach Anspruch 1, **dadurch gekennzeichnet, dass** die Temperatur des Lagerträgers durch den wenigstens ersten Temperatursensor gemessen wird, wobei der erste Temperatursensor bevorzugt am Lagerträger, insbesondere auf dem Lagerträger montiert ist, idealerweise an einer von außen zugänglichen Stelle des Lagerträgers.

3. Verfahren nach einem der vorhergehenden Ansprüche, **dadurch gekennzeichnet, dass** die Auswerteeinheit auf einen erfolgten Ein- und/oder Ausschaltvorgang der Rotationsbewegung der Maschine schließt, wenn der betrachtete Gradient wenigstens einen Mindestwert überschreitet oder innerhalb wenigstens eines Mindestbereichs liegt.

4. Verfahren nach Anspruch 3, **dadurch gekennzeichnet, dass** der wenigstens eine Mindestwert bzw. Mindestbereich in Abhängigkeit der Maschinengröße, insbesondere in Abhängigkeit des temperaturleitenden Maschinenvolumens initial oder durch einen im Maschinenbetrieb ausgeführten Optimierungsprozess der Auswerteeinheit dynamisch festgelegt wird.

5. Verfahren nach einem der vorhergehenden Ansprüche, **dadurch gekennzeichnet, dass** die Auswerteeinheit das Vorzeichen des Temperaturgradienten und/oder die durch den betrachteten Gradienten hervorgerufene maximale Temperaturänderung und/oder die Dauer der anhaltenden maximalen Temperaturänderung auswertet.

6. Verfahren nach Anspruch 5, **dadurch gekennzeichnet, dass** die Auswerteeinheit anhand des Betrags der maximalen Temperaturänderungen eine Laständerung und/oder Verschleißerscheinung der Maschine erkennt.

7. Verfahren nach einem der vorhergehenden Ansprüche, **dadurch gekennzeichnet, dass** der ermittelte Temperaturverlauf dem Verlauf einer Temperaturdifferenz zwischen Messwerten des ersten Temperatursensors sowie wenigstens eines weiteren Temperatursensors entspricht.

8. Verfahren nach Anspruch 7, **dadurch gekennzeichnet, dass** der wenigstens eine weitere Temperatursensor die Umgebungstemperatur der Maschine und/oder die Temperatur eines durch die Maschine strömenden Mediums erfasst.

9. Verfahren nach einem der vorhergehenden Ansprüche, **dadurch gekennzeichnet, dass** die Auswerteeinheit die erkannten Schaltvorgänge zählt, insbesondere um in Verbindung mit einem Zeitmesser mögliche Betriebs- und/oder Stillstandzeit der Maschine zu bestimmen.

10. Verfahren nach einem der vorhergehenden Ansprüche, **dadurch gekennzeichnet, dass** die Auswerteeinheit die Messfrequenz zumindest des ersten Temperatursensors dynamisch anpasst, insbesondere die Messfrequenz erhöht, sobald eine minimale Temperaturänderung und/oder ein minimaler Gradient erkannt wird.

11. Rotierende Maschine, insbesondere Pumpenaggregat, mit wenigstens einer Auswerteeinheit zur Ausführung des Verfahrens gemäß einem der vorhergehenden Ansprüche.

12. System bestehend aus einer rotierenden Maschine nach Anspruch 11 mit wenigstens einem Temperatursensor und einer externen Auswerteeinheit, die mit dem wenigstens einen Temperatursensor kommunikativ in Verbindung steht und zur Durchführung des Verfahrens gemäß den Ansprüchen 1 bis 10 konfiguriert ist.

13. Temperatursensor, der eine integrale Auswerteeinheit aufweist, zur Anbringung an wenigstens einer rotierenden Maschine, wobei die integrale Auswerteeinheitkonfiguriert ist zur Ausführung des Verfahrens gemäß einem der Ansprüche 1 bis 10.

## Claims

1. Method for detecting the state of operation of a rotating machine, in particular a centrifugal pump, having at least one first temperature sensor for detecting a temperature change at at least one bearing region of a rotating machine element, wherein an evaluation unit examines the temperature profile, determined by sensor, for temperature gradients, **characterized in that** the evaluation unit identifies a switch-on and/or switch-off process of the rotational movement of the machine on the basis of the characteristic of the determined temperature gradients.

2. Method according to Claim 1, **characterized in that** the temperature of the bearing support is measured by the at least one first temperature sensor, wherein the first temperature sensor is mounted preferably at the bearing support, in particular on the bearing support, ideally at a point of the bearing support that is accessible from outside.

3. Method according to one of the preceding claims, **characterized in that** the evaluation unit concludes that a switch-on and/or switch-off process of the rotational movement of the machine has taken place when the gradient under consideration exceeds at least one minimum value or lies within at least one minimum range.

4. Method according to Claim 3, **characterized in that** the at least one minimum value or minimum range is defined initially or dynamically by an optimization process of the evaluation unit that is carried out while the machine is operating, in dependence on the machine size, in particular in dependence on the thermally conducting machine volume.

5. Method according to one of the preceding claims, **characterized in that** the evaluation unit evaluates the sign of the temperature gradient and/or the maximum temperature change caused by the gradient under consideration and/or the duration of the sustained maximum temperature change.

6. Method according to Claim 5, **characterized in that** the evaluation unit identifies a load change and/or a sign of wear of the machine on the basis of the magnitude of the maximum temperature changes.

7. Method according to one of the preceding claims, **characterized in that** the determined temperature profile corresponds to the profile of a temperature difference between measured values of the first temperature sensor and of at least one further temperature sensor.

8. Method according to Claim 7, **characterized in that** the at least one further temperature sensor detects the ambient temperature of the machine and/or the temperature of a medium flowing through the machine.

9. Method according to one of the preceding claims, **characterized in that** the evaluation unit counts the identified switching processes, in particular in order to determine, in conjunction with a timer, possible operating and/or stoppage times of the machine.

10. Method according to one of the preceding claims, **characterized in that** the evaluation unit dynamically adjusts the measuring frequency of at least the first temperature sensor, in particular increases the measuring frequency, as soon as a minimum temperature change and/or a minimum gradient is identified.

11. Rotating machine, in particular a pumping set, having at least one evaluation unit for carrying out the method according to one of the preceding claims.

12. System consisting of a rotating machine according to Claim 11 having at least one temperature sensor and an external evaluation unit which is communicatively connected to the at least one temperature sensor and is configured to carry out the method according to Claims 1 to 10.

13. Temperature sensor, which has an integral evaluation unit, for mounting on at least one rotating machine, wherein the integral evaluation unit is configured to carry out the method according to one of Claims 1 to 10.

## Revendications

1. Procédé de détection de l'état de fonctionnement d'une machine tournante, notamment d'une pompe centrifuge, comprenant au moins un premier capteur de température destiné à détecter une variation de température au niveau d'au moins une zone de palier d'un élément de machine en rotation,
une unité d'interprétation analysant l'évolution de la température déterminée par détection pour y identifier un gradient de température,
**caractérisé en ce que**
l'unité d'interprétation reconnaît une opération de mise en marche et/ou d'arrêt du mouvement de rotation de la machine à l'aide de la caractéristique du gradient de température déterminé.

2. Procédé selon la revendication 1, **caractérisé en ce que** la température du support de palier est mesurée par l'au moins un premier capteur de température, le premier capteur de température étant de préférence monté au niveau du support de palier, notamment sur le support de palier, idéalement au niveau d'un endroit du support de palier qui est accessible depuis l'extérieur.

3. Procédé selon l'une des revendications précédentes, **caractérisé en ce que** l'unité d'interprétation conclut à une opération de mise en marche et/ou d'arrêt du mouvement de rotation de la machine effectuée lorsque le gradient considéré dépasse au moins une valeur minimale ou se trouve à l'intérieur d'au moins une plage minimale.

4. Procédé selon la revendication 3, **caractérisé en ce que** l'au moins une valeur minimale ou plage minimale est spécifiée en fonction de la taille de la machine, notamment initialement en fonction du volume de machine thermoconducteur ou dynamiquement par un processus d'optimisation de l'unité d'interprétation qui est exécuté en fonctionnement de la machine.

5. Procédé selon l'une des revendications précédentes, **caractérisé en ce que** l'unité d'interprétation interprète le signe du gradient de température et/ou la variation de température maximale provoquée par le gradient considéré et/ou la durée de la variation de température maximale persistante.

6. Procédé selon la revendication 5, **caractérisé en ce que** l'unité d'interprétation reconnaît, à l'aide de l'amplitude des variations de température, un changement de charge et/ou l'apparition d'une usure de la machine.

7. Procédé selon l'une des revendications précédentes, **caractérisé en ce que** l'évolution de la température déterminée correspond à l'évolution d'une différence de température entre les valeurs mesurées du premier capteur de température ainsi qu'au moins un capteur de température supplémentaire.

8. Procédé selon la revendication 7, **caractérisé en ce que** l'au moins un capteur de température supplémentaire détecte la température ambiante de la machine et/ou la température d'un fluide qui s'écoule à travers la machine.

9. Procédé selon l'une des revendications précédentes, **caractérisé en ce que** l'unité d'interprétation compte les opérations de commutation reconnues, notamment afin de déterminer, à l'aide d'un chronomètre, les temps de fonctionnement et/ou d'immobilisation possibles de la machine.

10. Procédé selon l'une des revendications précédentes, **caractérisé en ce que** l'unité d'interprétation adapte dynamiquement la fréquence de mesure d'au moins le premier capteur de température, notamment augmente la fréquence de mesure, dès qu'une variation de température minimale et/ou un gradient minimal est reconnu.

11. Machine tournante, notamment groupe de pompe, comprenant au moins une unité d'interprétation destinée à mettre en œuvre le procédé selon l'une des revendications précédentes.

12. Système composé d'une machine tournante selon la revendication 11, comprenant au moins un capteur de température et une unité d'interprétation externe, laquelle se trouve en liaison de communication avec l'au moins un capteur de température et est configurée pour mettre en œuvre le procédé selon l'une des revendications 1 à 10.

13. Capteur de température, qui possède une unité d'interprétation intégrée, destiné à être monté sur au moins une machine tournante, l'unité d'interprétation intégrée étant configurée pour la mise en œuvre du procédé selon l'une des revendications 1 à 10.
